# EUROPEAN PATENT APPLICATION

(11) **EP 2 472 704 A2**
(43) Date of publication of application: **04.07.2012**
(21) Application number: 11188565.3
(22) Date of filing: 10.11.2011
(51) Int. Cl.: H02K 1/14, H02K 15/02

(54) **Motor, manufacturing method for the same and washing machine**

(30) Priority: 29.12.2010 KR 20100137644
(71) Applicant: Samsung Electronics Co., Ltd., Suwon-si, Gyeonggi-do 506-762 (KR)
(72) Inventor: Yoon, Keun Young, Gyeonggi-do (KR); Valery, Pavlov, Gyeonggi-do (KR); Kang, Sung Wook, Seoul (KR); Kim, Young Kwan, Gyeonggi-do (KR)
(74) Representative: Grünecker, Kinkeldey, Stockmair & Schwanhäusser

(57) **Abstract**

A motor includes a ring-shaped stator, and a rotor to be rotated via electromagnetic interaction with the stator. The stator includes core plates stacked one above another. Each core plate includes an arc-shaped body and a plurality of teeth connected to the body, on which a coil is wound. The body of the core plate includes at least one bending inducer incised in a circumferential direction of the body.

## Description

### BACKGROUND

### 1. Field

Embodiments of the present disclosure relate to a motor to generate rotational power and a manufacturing method for the same, and a washing machine having the motor manufactured using the method.

### 2. Description of the Related Art

A washing machine is devised to wash clothes using electric power and generally includes a tub in which wash water is stored, a drum rotatably installed in the tub, and a motor to provide the drum with rotational power.

When laundry and detergent-dissolved water are input into the drum and the drum is rotated by the motor, contaminants adhered to the laundry are removed by friction between the laundry and the drum and between the laundry and the detergent-dissolved water.

The motor of the washing machine includes a stator mounted to a tub, and a rotor arranged around the stator to electromagnetically interact with the stator. Motors usable with washing machines may be classified into an outer-rotor type motor in which a rotor is located outside a stator and an inner-rotor type motor in which a rotor is located inside a stator.

A stator is a stack of press-formed metal plates. To reduce scraps generated during press-forming, metal plates are linearly formed and then stacked one above another and the resulting stack of metal plates is bent in an arc shape.

The stacked metal plates are provided with incision lines to facilitate bending thereof. The incision lines provide easy bending, but may weaken the strength of the stator and generate noise due to mechanical or electromagnetic vibration during operation of the motor. In addition, the incision lines intercept magnetic flux, deteriorating the output of the motor.

### SUMMARY

Therefore, it is an aspect of the present disclosure to provide a motor to improve manufacturability and strength of a stator and a washing machine having the motor.

Additional aspects of the disclosure will be set forth in part in the description which follows and, in part, will be apparent from the description, or may be learned by practice of embodiments of the disclosure.

In accordance with one aspect of the present disclosure, a motor includes a ring-shaped stator, and a rotor to be rotated via electromagnetic interaction with the stator, wherein the stator includes core plates stacked one above another, wherein each core plate includes an arc-shaped body and a plurality of teeth connected to the body, on which a coil is wound, and wherein the body includes at least one bending inducer incised in a circumferential direction of the body.

The bending inducer may include a first incision and a second incision spaced apart from each other in a radial direction of the body.

The bending inducer may be located closer to an inner circumference of the body than an outer circumference of the body.

The bending inducer may further include a raised portion between the first incision and the second incision, and the raised portion may form a caulking portion when pressure is applied thereto.

The bending inducer may be located between the two neighboring teeth.

The at least one bending inducer may include a plurality of bending inducers, the plurality of bending inducers being arranged on a single circumference of the body.

The rotor may be located inside the stator.

The stator may include an arc-shaped core segment in the form of a stack of the core plates, and the stator may be formed by connecting a plurality of core segments to one another.

The bending inducer may include a first incision face and a second incision face, facing ends of which are connected to each other, the first and second incision faces being arranged close to each other.

The at least one bending inducer may include a plurality of bending inducers spaced apart from one another in a radial direction of the body.

The at least one bending inducer may include a plurality of bending inducers, the plurality of bending inducers being arranged on a single circumference of the body.

In accordance with another aspect of the present disclosure, a washing machine includes a main body, a rotating tub rotatably placed in the main body, a rotor connected to the rotating tub so as to transmit rotational power to the rotating tub, a ring-shaped stator to electromagnetically interact with the rotor so as to enable rotation of the rotor, a plurality of arc-shaped core plates stacked one above another to form the stator, and a bending inducer incised in a circumferential direction of each core plate.

The bending inducer may include a first incision and a second incision spaced apart from each other in a radial direction of the core plate.

The bending inducer may include a first incision and a second incision, facing ends of which are connected to each other, the first and second incisions being arranged close to each other.

In accordance with a further aspect of the present disclosure, a manufacturing method of a motor including a plurality of core plates each having a linear body and a plurality of teeth connected to the body, includes preparing a bending inducer by forming an incision in a longitudinal direction of the body, preparing a linear core segment by stacking the plurality of core plates one above another, and preparing an arc-shaped core segment by applying bending force to the linear core segment.

The manufacturing method may further include preparing a plurality of core segments, and preparing a ring-shaped stator by connecting the plurality of core segments to one another.

The incision may include a first incision and a second incision spaced apart from each other, and the preparation of the bending inducer may include pressing a portion between the first incision and the second incision to form a raised portion.

The manufacturing method may further include pressing the raised portion to form a caulking portion after the preparation of the core segment.

The incision may include a first incision face and a second incision face, facing ends of which are connected to each other, and the preparation of the bending inducer may include forming a bending induction hole in the longitudinal direction of the body between the first incision face and the second incision face.

The preparation of the bending inducer may include forming a plurality of bending induction holes in a thickness direction of the body with a distance therebetween.

The preparation of the bending inducer may include forming a plurality of bending induction holes in a longitudinal direction of the body with a distance therebetween.

### BRIEF DESCRIPTION OF THE DRAWINGS

These and/or other aspects of the present disclosure will become apparent and more readily appreciated from the following description of the embodiments, taken in conjunction with the accompanying drawings of which:
FIG. 1 is a view illustrating a major configuration of a washing machine according to an embodiment of the present disclosure;
FIG. 2 is a view illustrating a major configuration of a motor according to an embodiment of the present disclosure;
FIG. 3 is a view illustrating a core plate according to an embodiment of the present disclosure;
FIG. 4 is an enlarged view of a bending inducer illustrated in FIG. 3;
FIG. 5 is a view illustrating a linear core segment including the core plate of FIG. 3;
FIG. 6 is a view illustrating a bent state of the linear core segment of FIG. 5;
FIG. 7 is a view illustrating deformation of the bending inducer provided at the core segment of
FIG. 6;

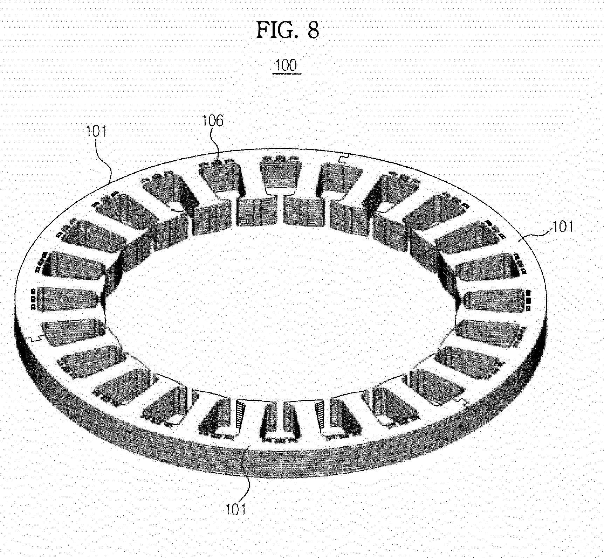

FIG. 8 is a view illustrating a stator according to the embodiment of the present disclosure;

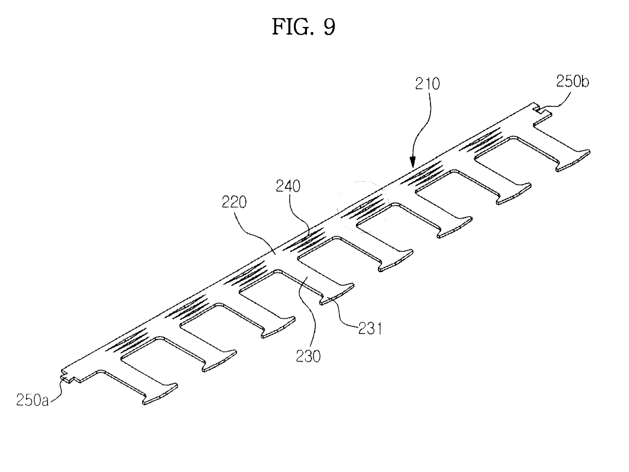

FIG. 9 is a view illustrating a core plate according to another embodiment of the present disclosure;

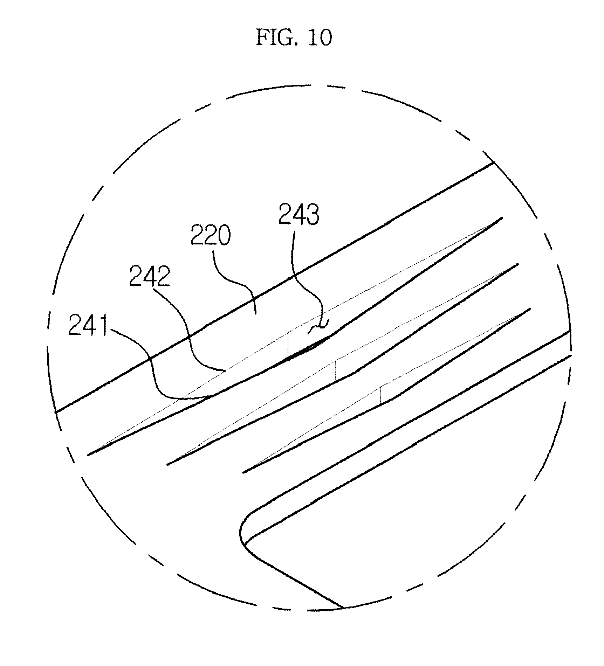

FIG. 10 is an enlarged view illustrating a bending inducer of FIG. 9;

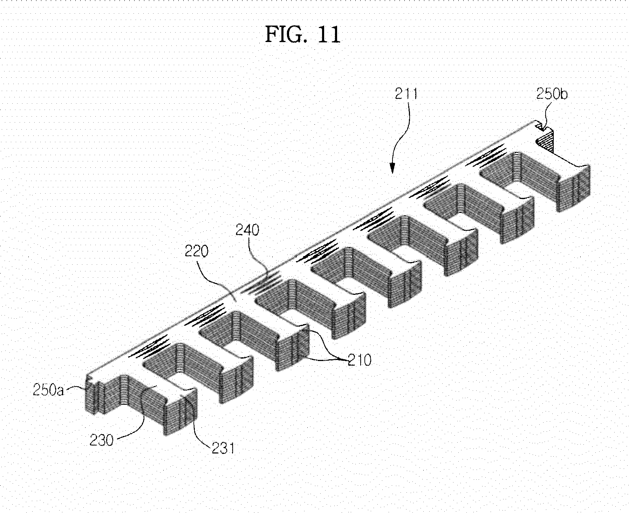

FIG. 11 is a view illustrating a linear core segment including the core plate of FIG. 9;

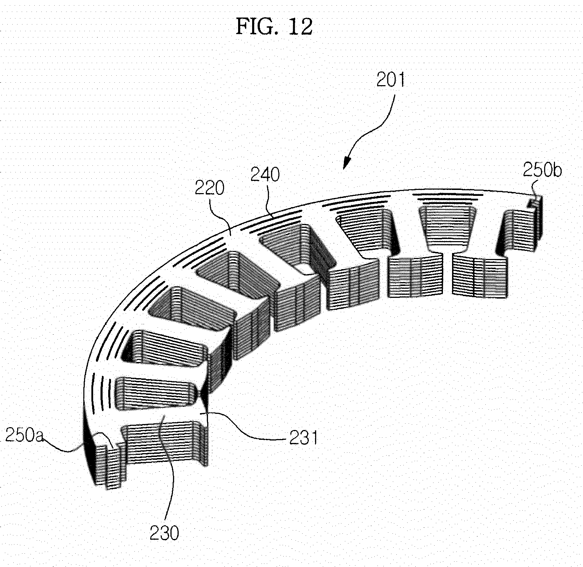

FIG. 12 is a view illustrating a bent state of the linear core segment of FIG. 11;

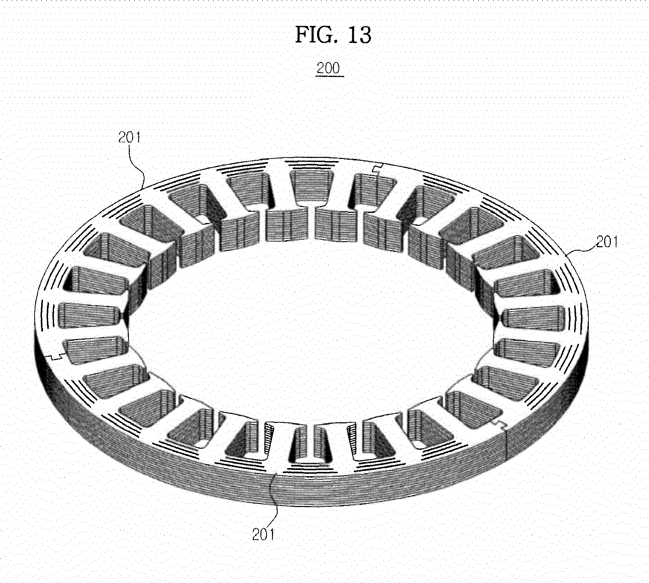

FIG. 13 is a view illustrating a stator according to the embodiment of the present disclosure;

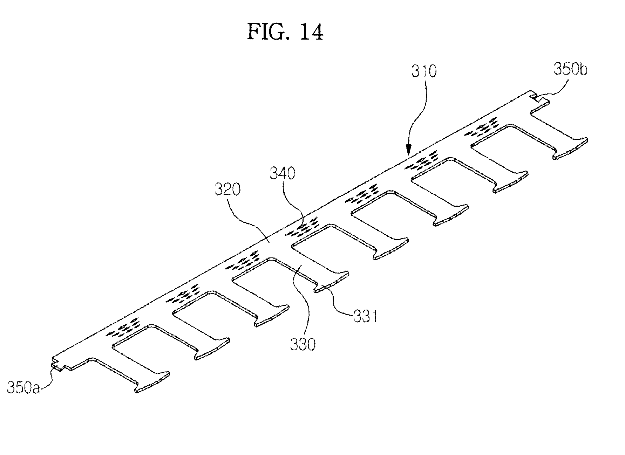

FIG. 14 is a view illustrating a core plate according to a further embodiment of the present disclosure; and

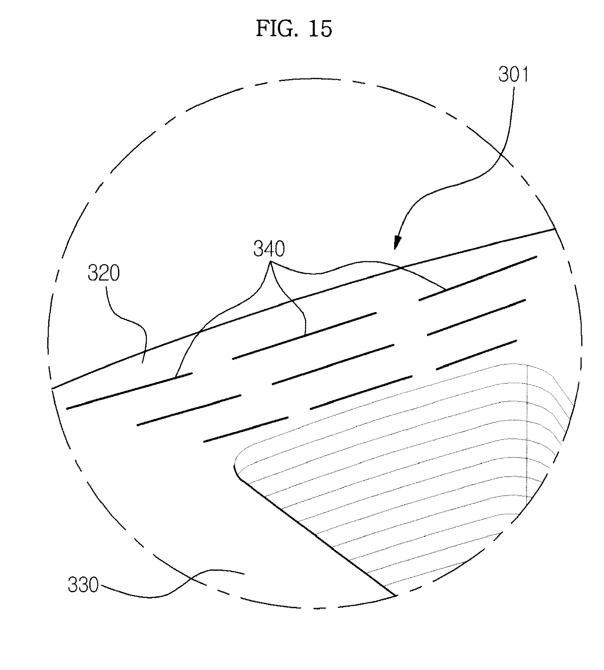

FIG. 15 is an enlarged view illustrating a bending inducer provided at a core segment including the core plate of FIG. 14.

### DETAILED DESCRIPTION

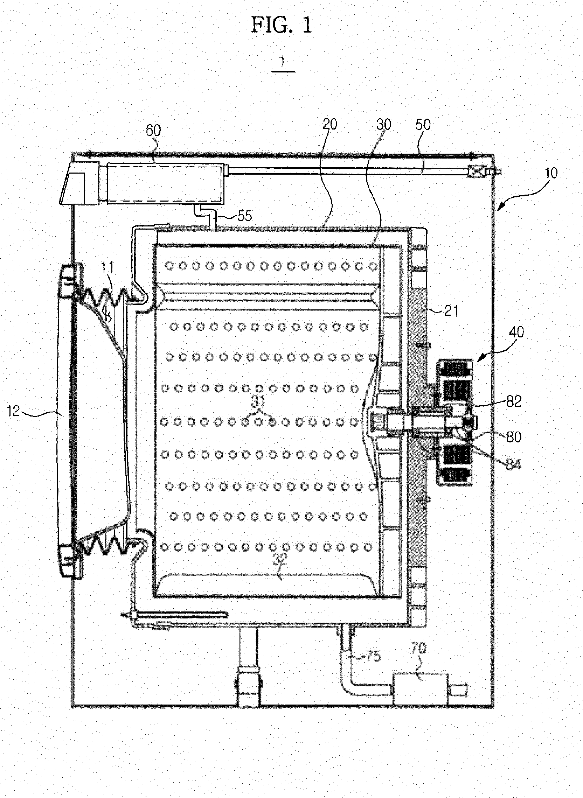

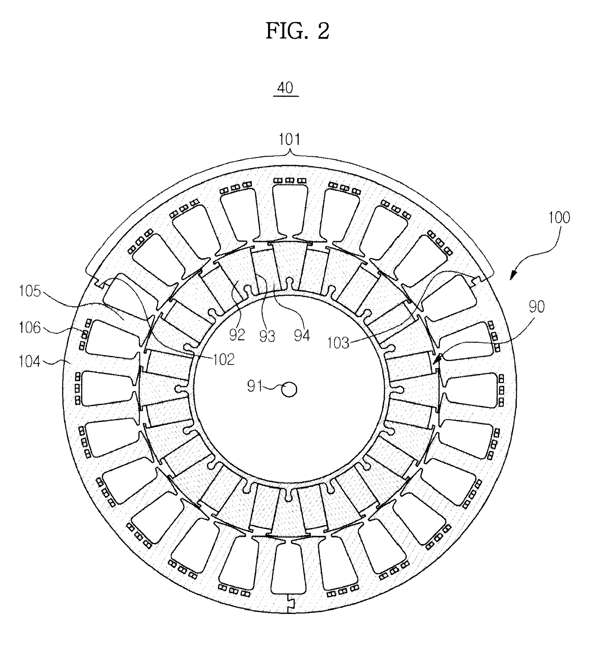

Reference will now be made in detail to the exemplary embodiments of the present disclosure, examples of which are illustrated in the accompanying drawings, wherein like reference numerals refer to like elements throughout. FIG. 1 is a view illustrating a major configuration of a washing machine according to the embodiment of the present disclosure, and FIG. 2 is a view illustrating a major configuration of a motor according to the embodiment of the present disclosure.

As illustrated in FIG. 1, the washing machine 1 includes a cabinet 10 defining an external appearance of the washing machine 1, a tub 20 placed in the cabinet 10, a drum 30 rotatably placed in the tub 20, and a motor 40 to drive the drum 30.

The cabinet 10 is perforated in a front wall thereof with an opening 11 through which laundry is put into the drum 30. A door 12 is coupled to the front wall of the cabinet 10 to open or close the opening 11.

A water supply pipe 50 is installed above the tub 20 to supply wash water into the tub 20. The water supply pipe 50 has one end connected to an external water source (not shown) and the other end connected to a detergent feeding device 60. The detergent feeding device 60 is connected to the tub 20 via a connection pipe 55. Thus, the wash water supplied via the water supply pipe 50 is first mixed with detergent in the detergent feeding device 60 and then, supplied into the tub 20.

A water drain pump 70 and a water drain pipe 75 are installed below the tub 20 to discharge the wash water from the tub 20 to the outside of the cabinet 10.

The drum 30 is circumferentially provided with a plurality of through-holes 31 for passage of the wash water. A plurality of lifters 32 is arranged at an inner circumferential surface of the drum 30 to raise and drop laundry during rotation of the drum 30.

A drive shaft 80 is installed between the drum 30 and the motor 40. The drive shaft 80 transmits rotational power of the motor 40 to the drum 30. One end of the drive shaft 80 is connected to the drum 30 and the other end of the drive shaft 80 extends outward from a rear wall 21 of the tub 20.

A bearing housing 82 is mounted to the rear wall 21 of the tub 20, to rotatably support the drive shaft 80. The bearing housing 82 may be made of an aluminum alloy and may be inserted into the rear wall 21 during injection molding of the tub 20. Bearings 84 are interposed between the bearing housing 82 and the drive shaft 80, to assure smooth rotation of the drive shaft 80.

As illustrated in FIG. 2, the motor 40 includes a stator 100 mounted to the rear wall 21 of the tub 20 and a rotor 90 placed inside the stator 100 so as to be rotated via electromagnetic interaction with the stator 100.

The stator 100 generally has a ring shape and includes a plurality of arc-shaped core segments 101. The plurality of core segments 101 may be identical to one another. Each core segment 101 is provided at one end thereof with a coupling boss 102 and at the other end thereof with a coupling recess 103. As the coupling bosses 102 of the plurality of core segments 101 are inserted into the respective coupling recesses 103, the stator 100 is completed. Alternatively, the stator 100 may need not the plurality of core segments 101, but may instead include a single ring-shaped core, the coupling boss 102 at one end of the single ring-shaped core being inserted into the coupling recess 103 at the other end of the singe ring-shaped core.

The core segment 101 includes an arc-shaped core body 104, a plurality of core teeth 105 extending in a radial inward direction from an inner circumference of the core body 104 at a constant interval, and a coil (not shown) wound on the respective core teeth 105.

The rotor 90 includes a plurality of rotor cores 92 radially arranged about a rotating shaft 91, permanent magnet seats 93 between the plurality of rotor cores 92, and a plurality of permanent magnets 94 seated on the permanent magnet seats 93.

The coil (not shown) may be wound on the core teeth 105 in a three-phase wiring manner. If three-phase alternating current is applied to the coil (not shown), the rotor 90 is affected by a three-phase rotational magnetic field. With interaction between the three-phase rotational magnetic field and a magnetic field of the permanent magnets of the rotor 90, the rotor 90 is rotated about the rotating shaft 91.

The core body 104 is provided with a caulking portion 106. This will be described hereinafter.

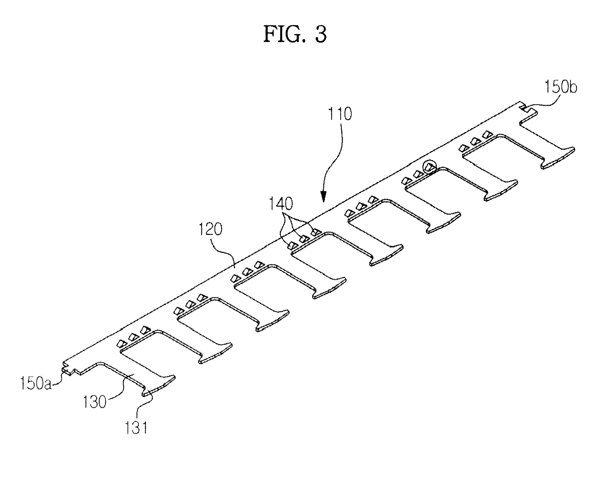

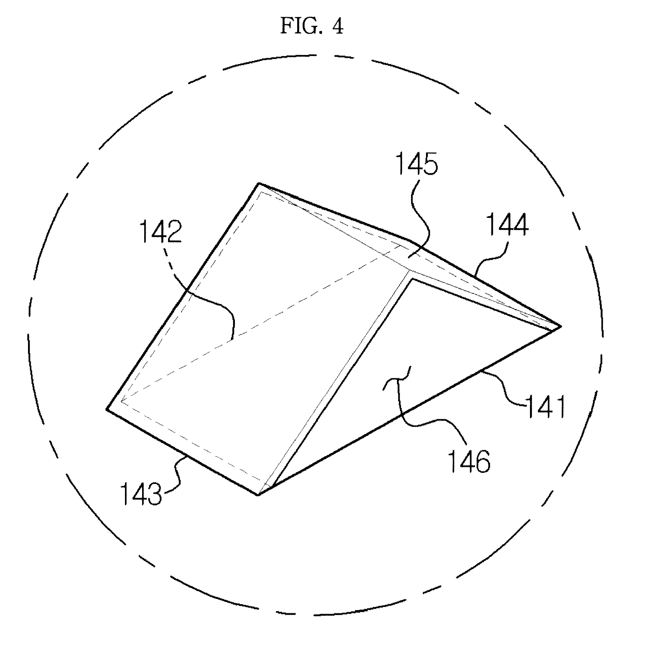

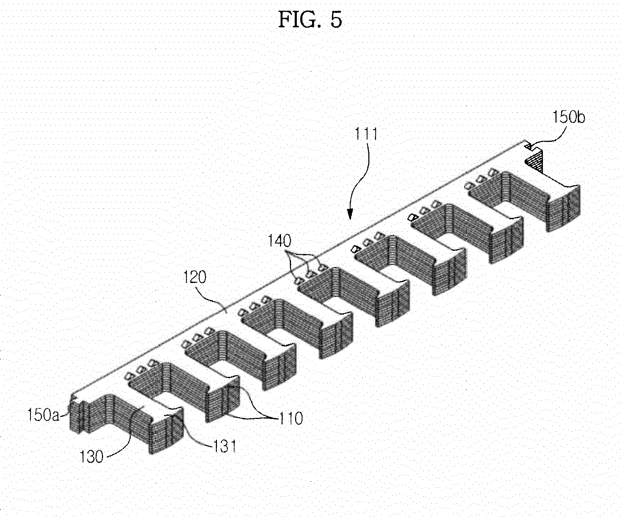

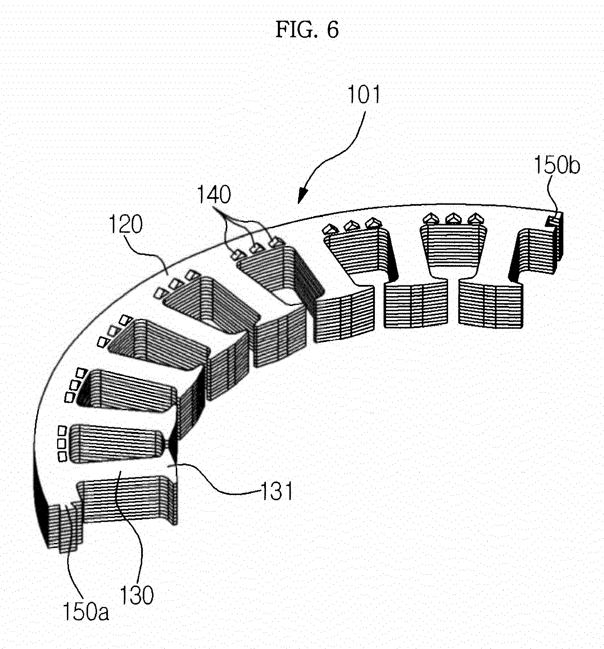

FIG. 3 is a view illustrating the core plate according to the embodiment of the present disclosure, and FIG. 4 is an enlarged view of a bending inducer illustrated in FIG. 3. FIG. 5 is a view illustrating the linear core segment according to the embodiment of the present disclosure, and FIG. 6 is a view illustrating a bent state of the linear core segment of FIG. 5.

As illustrated in FIGS. 3 to 6, the core segment 101 is obtained by bending a linear core segment 111.

The linear core segment 111 is a stack of linear core plates 110. The linear core segment 111 is made of a ferromagnetic material, such as metal, to provide a magnetic path for passage of a magnetic field. Thus, the core plate 110 is made by press-forming a metal plate.

The core plate 110 includes a linear body 120 extending in a given direction to have a predetermined width, a plurality of teeth 130 connected to the body 120, a coupling boss 150a provided at one end of the body 120, and a coupling recess 150b provided at the other end of the body 120. The coupling boss 150a and the coupling recess 150b respectively define the coupling boss 102 and the coupling recess 103 of the linear core segment 111 that is a stack of the core plates 110.

Although originally forming the core plate 110 to have an arc shape enables omission of a bending process which will be described hereinafter, this may increase metal scraps, causing increased production costs. For this reason, the core plate 110 initially has a linear shape.

To minimize scraps during processing, two core plates may be simultaneously press-formed to face each other. In this case, the two core plates 110 are arranged side by side such that the respective teeth 130 of one core plate 110 are alternately arranged with the teeth 130 of the facing core plate 110.

The body 120 has a plurality of insert holes (not shown) arranged at a constant interval. After the core plates 110 are completely stacked one above another, fastening members, such as pins or rivets, are inserted into the insert holes to couple the respective core plates 110 with one another so as to constitute the core segment 101. The insert holes (not shown) may be formed even in the teeth 130.

Referring to FIG. 3, the teeth 130 of the core plate 110 are provided with hooks 131. When the coil (not shown) is wound on the core teeth 105 of the core segment 101, the hooks 131 prevent unwanted separation of the coil from the core teeth 105.

The linear core segment 111 is a stack of the plurality of core plates 110 and is bent into the arc-shaped core segment 101 when force is applied thereto. Although bending the linear core segment 111 made of metal may need enormous force, applying the enormous force to the linear core segment 111 may fail to deform the linear core segment 111 into a desired shape or may cause damage to the linear core segment 111. Thus, to allow the linear core segment 111 to be bent into a desired shape using less force, the body 120 of the core plate 110 is provided with a bending inducer 140.

The bending inducer 140 includes a first incision line 141 and a second incision line 142 arranged a predetermined distance from each other, a first folding line 143 connecting ends of the first and second incision lines 141 and 142, and a second folding line 144 connecting the other ends of the first and second incision lines 141 and 142. The bending inducer 140 includes a raised portion 145 protruding between the first folding line 143 and the second folding line 144, and a bending inducing space 146 below the raised portion 145.

The bending inducer 140 may be formed during press-formation of the core plate 110. The first and second incision lines 141 and 142 are cutout in one surface of the body 120 of the core plate 110, and a portion between the first incision line 141 and the second incision line 142 is pressed to form the first and second folding lines 143 and 144 and the raised portion 145. The first incision line 141 and the raised portion 145 may be simultaneously created by pressing, or the raised portion 145 may be created after cutout of the first incision line 141.

The bending inducer 140 is located between the neighboring teeth 130 of the body 120 because regions of the body 120 close to the teeth 130 have less strain due to bending force during stacking and bending of the core plates 110. Moreover, the regions of the body 120 close to the teeth 130 are on a magnetic flux path and thus, forming the bending inducer 140 thereon may cause leakage of magnetic flux.

In addition, the bending inducer 140 is located at a position closer to the center of an arc defined by the core segment 101, i.e. located closer to the inner circumference of the core plate 110 than the outer circumference of the core plate 110 when the core plate 110 is bent. In the bent state of the core plate 110, attractive stress is applied to the vicinity of the inner circumference of the core plate 110, whereas repulsive stress is applied to the vicinity of the outer circumference of the core plate 110. When providing the bending inducer 140 at a position where attractive stress, i.e. negative stress is applied, force required to bend the core plate 110 may be reduced.

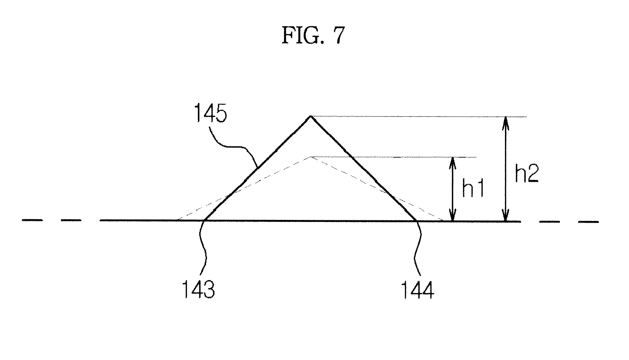

FIG. 7 is a view illustrating deformation of the bending inducer on the core segment of FIG. 6, and FIG. 8 is a view illustrating a stator according to an embodiment of the present disclosure.

If negative stress is applied to the bending inducer 140, the bending inducer 140 is deformed such that the first folding line 143 and the second folding line 144 approach to each other. Thus, lengths of the first and second incision lines 141 and 142 are reduced, and the raised portion 145 is further raised. Setting an initial height of the bending inducer 140 to h1, a height of the deformed bending inducer 140 is changed to h2.

A plurality of bending inducers 140 may be provided. When the plurality of bending inducers 140 are spaced apart from one another in a radial direction of the arc-shaped core segment 101, leakage of magnetic flux may be increased because the bending inducers 140 function as obstacles to magnetic flux. For this reason, the plurality of bending inducers 140 may be located at the same distance from the center of the arc defined by the core segment 101. In other words, the plurality of bending inducers 140 may be arranged on a single circumference of the bent core plates 110.

After completing bending of the linear core segment 111, the bending inducers 140 are pressed to form the caulking portions 106. When the bending inducers 140 are pressed, the neighboring upper and lower bending inducers 140 come into close contact with each other, In this case, the stress applied to the bending inducers 140 may be accumulated as coupling energy between the neighboring bending inducers 140, resulting in increased coupling force between the stacked core plates 110.

Referring to FIG. 2, a connecting region between the two neighboring core teeth 105 of the core body 104 has a great width or area, thus increasing the rigidity of the core segment 101. This may reduce noise generated from the core segment 101 due to mechanical vibration or electromagnetic vibration during operation of the motor. Furthermore, increased coupling force between the core plates 110 obtained by pressing the bending inducers 140 may reduce noise due to vibration of the respective core plates 110.

Finally, the plural core segments 101 are connected to one another to form the ring-shaped stator 100. Although the embodiment illustrates the bending inducers 140 as being pressed to form the caulking portions 106 before the core segments 101 are assembled to one another to form the stator 100, the bending inducers 140 may be pressed after assembly of the stator 100 as necessary.

FIG. 9 is a view illustrating a core plate according to another embodiment of the present disclosure, and FIG. 10 is an enlarged view illustrating a bending inducer of FIG. 9. Also, FIG. 11 is a view illustrating a linear core segment according to the embodiment of the present disclosure, and FIG. 12 is a view illustrating a bent state of the linear core segment of FIG. 11.

As illustrated in FIGS. 9 to 12, the core segment 201 is formed by bending a linear core segment 211. The linear core segment 211 is a stack of linear core plates 210, and the core plates 210 are press-formed metal plates.

The core plate 210 includes a linear body 220 extending in a given direction to have a predetermined width, a plurality of teeth 230 having hooks 231 connected to the body 120, a coupling boss 250a provided at one end of the body 220, and a coupling recess 250b provided at the other end of the body 220. The body 220, teeth 230, coupling boss 250a and coupling recess 250b are identical to those illustrated in FIGS. 3 to 6 and thus, a description thereof will be omitted hereinafter.

Bending the linear core segment 211 may need enormous force. Thus, to allow the linear core segment 211 to be bent into a desired shape using less force, the body 220 of the core plate 210 is provided with a bending inducer 240 to induce bending of the linear core segment 211.

The bending inducer 240 includes a first incision face 241 and a second incision face 242, both ends of which are connected to each other, and a bending induction hole 243 between the first incision face 241 and the second incision face 242. The bending inducer 240 may be formed during press-formation of the core plate 210. The bending induction hole 243 extends by a predetermined distance in a longitudinal direction of the body 220 such that the first incision face 241 and the second incision face 242 are close to each other when a stack of the core plates 210 is bent.

The bending inducer 240 is located between the neighboring teeth 230 of the body 220 because regions of the body 220 close to the teeth 230 have less strain due to bending force during stacking and bending of the core plates 210. Moreover, the regions of the body 220 close to the teeth 230 are on a magnetic flux path and thus, forming the bending inducer 240 thereon may cause leakage of magnetic flux.

Stress applied to the vicinity of the bending inducer 240 during bending of the linear core segment 211 may cause the bending inducer to be deformed such that the first incision face 241 and the second incision face 242 are moved toward each other. Thus, the bending induction hole 243 is reduced and the first and second incision faces 241 and 242 are located close to each other.

A plurality of bending inducers 240 may be provided. The plurality of bending inducers 240 are spaced apart from one another in a radial direction of an arc defined by the core segment 201 when the stack of the core plates 210 is bent. Since the bending induction hole 243 of the bending inducer 240 extends in the longitudinal direction of the body 220 and the bending induction hole 243 has a very small size when the linear core segment 211 is bent, leakage of magnetic flux is not greatly increased even if the bending inducers 240 are spaced apart from one another in the radial direction of the core segment 201.

When the linear core segment 211 is bent to the core segment 201, the outer circumference of the core segment 201 has a greater strain than the inner circumference of the core segment 201. Thus, with regard to the plurality of bending inducers 240, lengths of the bending induction holes 243 are in proportion to the strain. That is, the length of the bending induction hole 243 at a radially outward position of the core segment 201 is greater than the length of the bending induction hole 243 at a radially inward position of the core segment 201.

The incision faces 241 and 242 of the bending inducer 240 extend in the longitudinal direction of the body 220, which provides the core segment 201 with increased mechanical rigidity. This may reduce noise generated from the core segment 201 due to mechanical or electromagnetic vibration during operation of the motor.

FIG. 13 is a view illustrating a stator according to the present embodiment. As illustrated in FIG. 13, the plural core segments 201 are connected to one another to form a ring-shaped stator 200.

FIG. 14 is a view illustrating a core plate according to a further embodiment of the present disclosure, and FIG. 15 is an enlarged view illustrating a bending inducer provided at a core segment including the core plate of FIG. 14.

As illustrated in FIGS. 14 and 15, the core plate 310 includes a body 320, teeth 330 having hooks 331, bending inducers 340, a coupling boss 350a, and a coupling recess 350b.

Each bending inducer 340 has the same configuration as the bending inducer 240 illustrated in FIGS. 9 and 10. Unlike the bending inducer 240, a plurality of bending inducers 340 may be provided in a longitudinal direction of the body 320. The plurality of bending inducers 340 arranged in the longitudinal direction of the body 320 may be aligned on a single circumference of the bent core plates 310.

Although the inner rotor type motor in which the rotor 90 is rotatably placed inside the stator 100, 200 or 300 has been described above, the bending inducers 140, 240 and 340 according to the embodiments may be equally applied to an outer rotor type motor in which the rotor 90 is located outside the stator 100, 200 or 300.

As is apparent from the above description, according to one or more embodiments, a core plate of a stator is provided with at least one bending inducer to facilitate bending of a linear core segment in the form of a stack of core plates. The bending inducer also serves to enhance coupling force between core plates stacked one above another, resulting in reduced vibration and noise.

Further, arranging a plurality of bending inducers in a longitudinal direction of the core plate may increase the strength of the entire stator. This may reduce noise and vibration due to a reduced strength of the stator.

Furthermore, the bending inducer has an incision parallel to the path of a magnetic field passing through the stator. This position of the bending inducer may minimize leakage of magnetic flux due to presence of the bending inducer.

Although a few embodiments have been shown and described, it would be appreciated by those skilled in the art that changes may be made in these embodiments without departing from the principles and spirit of the invention, the scope of which is defined in the claims and their equivalents.

## Claims

1. A motor comprising:
a ring-shaped stator; and
a rotor to be rotated via electromagnetic interaction with the stator,
wherein the stator includes core plates stacked one above another,
wherein each core plate includes an arc-shaped body and a plurality of teeth connected to the body, on which a coil is wound, and
wherein the body includes at least one bending inducer incised in a circumferential direction of the body.

2. The motor according to claim 1, wherein the bending inducer includes a first incision and a second incision spaced apart from each other in a radial direction of the body.

3. The motor according to claim 2, wherein the bending inducer is located closer to an inner circumference of the body than an outer circumference of the body.

4. The motor according to claim 2, wherein the bending inducer further includes a raised portion between the first incision and the second incision, and
wherein the raised portion forms a caulking portion when pressure is applied thereto.

5. The motor according to claim 2, wherein the bending inducer is located between the two neighboring teeth.

6. The motor according to claim 1, wherein the bending inducer includes a first incision face and a second incision face, facing ends of which are connected to each other, the first and second incision faces being arranged close to each other.

7. The motor according to claim 6, wherein the at least one bending inducer includes a plurality of bending inducers spaced apart from one another in a radial direction of the body.

8. A washing machine comprising:
a main body;
a rotating tub rotatably placed in the main body;
a rotor connected to the rotating tub so as to transmit rotational power to the rotating tub;
a ring-shaped stator to electromagnetically interact with the rotor so as to enable rotation of the rotor;
a plurality of arc-shaped core plates stacked one above another to form the stator; and
a bending inducer incised in a circumferential direction of each core plate.

9. A manufacturing method of a motor comprising a plurality of core plates each having a linear body and a plurality of teeth connected to the body, the method comprising:
preparing a bending inducer by forming an incision in a longitudinal direction of the body;
preparing a linear core segment by stacking the plurality of core plates one above another; and
preparing an arc-shaped core segment by applying bending force to the linear core segment.

10. The method according to claim 9, wherein the incision includes a first incision and a second incision spaced apart from each other, and
wherein the preparation of the bending inducer includes pressing a portion between the first incision and the second incision to form a raised portion.

11. The method according to claim 10, wherein the raised portion is provided closer to an inner circumference of the core segment than an outer circumference of the core segment.

12. The method according to claim 10, wherein the raised portion is located at the body between the two neighboring teeth.

13. The method according to claim 10, further comprising pressing the raised portion to form a caulking portion after the preparation of the core segment.

14. The method according to claim 9, wherein the incision includes a first incision face and a second incision face, facing ends of which are connected to each other, and
wherein the preparation of the bending inducer includes forming a bending induction hole in the longitudinal direction of the body between the first incision face and the second incision face.

15. The method according to claim 14, wherein the preparation of the bending inducer includes forming a plurality of bending induction holes in a thickness direction of the body with a distance therebetween.
